# EUROPEAN PATENT APPLICATION

(11) **EP 4 810 146 A1**
(43) Date of publication of application: **23.09.2026**
(21) Application number: 24891471.5
(22) Date of filing: 14.11.2024
(51) Int. Cl.: B01D 53/62, B01D 53/14, C01B 32/50

(54) **METHOD FOR RECOVERING CARBON DIOXIDE AND CARBON DIOXIDE RECOVERING SYSTEM**

(30) Priority: 14.11.2023 JP 2023193524
(71) Applicant: Chiyoda Corporation, Kanagawa 220-8765 (JP)
(72) Inventor: HOSONO, Yasuo, Yokohama-shi, Kanagawa 220-8765 (JP); HIRAI, Toshihide, Yokohama-shi, Kanagawa 220-8765 (JP); NATSUYAMA, Kazuto, Yokohama-shi, Kanagawa 220-8765 (JP); KOTANI, Yui, Yokohama-shi, Kanagawa 220-8765 (JP)
(74) Representative: Gulde & Partner
(86) International application number: PCT/JP2024/040485
(87) International publication number: WO 2025/105435

(57) **Abstract**

The present invention aims to provide a process that can separate and recover carbon dioxide from large volumes of combustion exhaust gas in a space-saving and energy-saving manner.

According to the present invention, provided is a method for recovering carbon dioxide, comprising an absorbing step of passing combustion exhaust gas containing carbon dioxide through a radial flow type separation device equipped with an absorbent material to absorb the carbon dioxide into the absorbent material, and a releasing step of passing steam through the separation device to release carbon dioxide from the absorbent material.

## Description

### Technical Field

The present invention relates to a method for separating and recovering carbon dioxide from a gas containing carbon dioxide, and a carbon dioxide recovering system.

### Background Art

The problem of global warming due to the increase in atmospheric carbon dioxide concentration has long been pointed out. To solve this problem, reducing the amount of carbon dioxide emissions into the atmosphere has become an urgent issue.

Among the sources of carbon dioxide emissions into the atmosphere, combustion exhaust gases from waste incineration plants and thermal power plants account for a large proportion of emissions, along with automobile exhaust gases. In thermal power plants, it is common to generate electricity by burning fossil fuels such as coal, oil, and natural gas to heat water in a boiler, creating high-temperature and high-pressure steam (water vapor). This steam is then used to drive a steam turbine, which in turn rotates a generator directly connected to the shaft of the turbine to generate electricity. However, in recent years, gas turbine power generation, which uses natural gas as fuel to drive a gas turbine instead of a steam turbine, and combined cycle power generation, which uses the waste heat from the combustion exhaust gases of the gas turbine to generate steam and further drive a steam turbine, have been put into practical use. These advancements have significantly improved thermal efficiency and reduced power generation costs in thermal power generation. Furthermore, regarding the treatment of combustion exhaust gases from these power plants, air pollution control technologies such as dust removal, desulfurization, and denitrification have already reached a considerable level. However, regarding the reduction of carbon dioxide emissions into the atmosphere, as mentioned above, while there is active consideration of the shift from fossil fuels to renewable energy, the consideration of post-combustion capture (PCC) of carbon dioxide from combustion exhaust gases is still insufficient.

In addition, recently there has been a growing demand not only for the recovery of carbon dioxide from combustion exhaust gases, but also for the utilization and storage (CCUS) of the recovered carbon dioxide. Technology for separating and recovering carbon dioxide from combustion exhaust gases (having a carbon dioxide concentration of 13-14% by volume) of coal-fired boilers using an amine absorbent solution has already been put into practical use. However, the wet carbon dioxide absorbing process using an amine absorbent solution has drawbacks in terms of the cost associated with energy for regeneration.

Therefore, as an alternative to amine aqueous solutions, solid absorbent materials that can reduce the consumption of energy for regeneration have been developed, and carbon dioxide separation and recovery processes using these materials have been investigated. Non-patent literatures 1 and 2 disclose technology for recovering carbon dioxide using a fixed-bed reactor with a solid absorbent material.

### Citation List

### Patent Literature

Patent Literature 1: JPH11-147017

### Non-Patent Literature

Non-Patent Literature 1: Chemical Engineering Journal 307 (2017) 273-282
Non-Patent Literature 2: Ind. Eng. Chem. Res. 2021, 60, 9906-9914

### Summary of Invention

### Technical Problem

The carbon dioxide separation and recovering processes considered so far have primarily aimed at separating and recovering carbon dioxide (concentration of 13-14% by volume) contained in the combustion exhaust gas of coal-fired boilers. In contrast, the combustion exhaust gas from oil-fired boilers has a carbon dioxide concentration of less than 10% by volume, and the combustion exhaust gas from natural gas-fired boilers and gas turbines has a carbon dioxide concentration of less than 6% by volume (usually 3-4% by volume), which is lower than that of combustion exhaust gas from coal-fired boilers, about half to a quarter of the concentration. While this in itself contributes to reducing carbon dioxide emissions, recovering carbon dioxide from such low-concentration combustion exhaust gases requires processing large amounts of exhaust gas.

While the carbon dioxide separation and recovering process using a fixed-bed reactor with a solid absorbent material, as disclosed in Non-patent literatures 1 and 2, is itself an excellent method with low costs for regeneration energy, when it is attached to, for example, an existing thermal power plant (including gas turbine and combined cycle power plants) that uses oil or natural gas as fuel, it is necessary to enlarge the space required for the fixed-bed reactor to process large volumes of gas, or to increase the flow rate of combustion exhaust gas in the fixed-bed reactor. As a result, the operating cost per unit amount of carbon dioxide recovered increases. Furthermore, there may be cases where it is difficult to install a new carbon dioxide separation and recovering plant of the scale necessary to process all of the combustion exhaust gas due to insufficient space. There are also limits to increasing the flow rate of combustion exhaust gas in the fixed-bed reactor.

The present invention has been made in view of the above-mentioned problems. That is, the present invention aims to solve the problem of providing a process that can separate and recover carbon dioxide from large volumes of combustion exhaust gas in a space-saving and energy-saving manner.

### Solution to Problem

A method for recovering carbon dioxide according to one embodiment of the present invention is characterized by comprising an absorbing step of passing combustion exhaust gas containing carbon dioxide through a radial flow type separation device equipped with an absorbent material to absorb the carbon dioxide into the absorbent material, and a releasing step of passing steam through the separation device to release carbon dioxide from the absorbent material.

Furthermore, a carbon dioxide recovering system according to another embodiment of the present invention is characterized by comprising a radial flow type separation device equipped with an absorbent material, a first conduit for guiding combustion exhaust gas containing carbon dioxide to the separation device, and a second conduit for guiding steam to the separation device.

### Effects of Invention

The invention provides a process capable of separating and recovering carbon dioxide from large volumes of combustion exhaust gas in a space-saving and energy-efficient manner.

### Brief Description of the Drawings

Fig. 1 shows a cross-sectional view of an example of a radial flow separation device which can be preferably used in the method according to the present invention.
Fig. 2 shows a schematic diagram of an example of a process for separating and recovering carbon dioxide from combustion exhaust gas using the method according to the present invention.
Fig. 3 shows a schematic diagram illustrating an example of a configuration of a carbon dioxide separation and recovering plant which implements the method according to the present invention.

### Description of Embodiments

The method according to the present invention is a method for separating and recovering carbon dioxide from a gas mixture containing carbon dioxide, particularly from combustion exhaust gas under atmospheric pressure. The method according to the present invention is a space-saving and energy-saving method particularly suitable for separating and recovering carbon dioxide from combustion exhaust gas from gas turbines in gas turbine power plants and combined cycle power plants that use natural gas as fuel. The method according to the present invention has an advantage that, for example, it is relatively easy to attach a plant for separating and recovering carbon dioxide from combustion exhaust gas to an existing power plant.

The method according to the present invention utilizes SA-VSA (steam-assisted vacuum swing adsorption) with an absorbent material to separate and recover carbon dioxide from gas mixtures containing carbon dioxide, particularly from combustion exhaust gas under atmospheric pressure. Conventionally, amine absorption methods, which typically use monoethanolamine aqueous solution as the absorbent solution, are used to recover carbon dioxide from gas mixtures containing carbon dioxide (CO₂ concentration of 10% by volume or more). However, when recovering carbon dioxide from gas mixtures with low carbon dioxide concentrations (CO₂ concentration of less than 10% by volume), such as combustion exhaust gas from gas turbine power plants or combined cycle power plants that use natural gas as fuel (CO₂ concentration of less than 6% by volume), in particular, the amine absorption method requires the use of an amine that binds carbon dioxide more strongly. This increases the costs required for heating during regeneration and for replacing degraded amines. For this reason, it is preferable to use a solid absorbent material as the absorbent material, which has superior carbon dioxide absorption and release characteristics (especially release characteristics) and the advantage of not containing water, thus eliminating the need to include the latent heat of vaporization of water in the heating energy during regeneration.

As such a solid absorbent material, a granular inorganic porous support, for example, one prepared by supporting a polyamine compound on porous silica, can be suitably used. Granular porous silica can be obtained, for example, by adding a pore-expanding agent such as trimethylbenzene to an acetic acid aqueous solution of a hydrophilic polymer (e.g., P-123 from Sigma-Aldrich) and mixing well, then adding an aqueous sodium silicate solution and mixing gently at room temperature for 24 hours, further standing at 100°C for 24 hours, filtering and washing the resulting solid, drying the solid at 80°C for 2 days, and calcining the obtained dried solid at 550°C in air for 4 hours to obtain a powder, which can then be granulated to a particle size of about 2 mm. The obtained granular porous silica can be dispersed in methanol, for example, and a suitable polyamine compound (e.g., functionally protected tetraethylenepentamine) can be added to this dispersion to impregnate the porous silica with the polyamine compound, followed by drying to obtain granular porous silica supported with a polyamine compound (see Non-Patent Literature 1).

The separation and recovery of carbon dioxide by SA-VSA is carried out by alternately repeating an absorbing step, in which the gas containing carbon dioxide is brought into contact with an absorbent material under atmospheric pressure to absorb and capture the carbon dioxide contained in the gas, and a releasing step, in which the absorbent material that has absorbed carbon dioxide is brought into contact with low-temperature steam under reduced pressure to release the carbon dioxide. In SA-VSA, the absorbent material is placed under atmospheric pressure during the absorption operation and under reduced pressure during the release operation, so these operations are necessarily carried out in an airtight container. The gas-solid contact operation between the gas to be treated and the solid absorbent material in the absorbing step can be carried out in various forms such as packed bed, moving bed, and fluidized bed, but if the concentration of carbon dioxide in the gas to be treated is low and it is desirable that there is almost no leakage of carbon dioxide into the gas after the treatment, a packed bed form with good contact efficiency and little channeling is preferred. On the other hand, in the gas-solid contact operation between the steam and the solid absorbent material in the releasing step, as the flow speed of the steam is significantly smaller than the flow speed of the gas to be treated, the use of moving bed or fluidized bed is not possible, and it is necessarily carried out in packed bed form as in the absorbing step.

The method according to the present invention is characterized by its ability to process a large amount of gas in the absorbing step. Assuming the gas hourly space velocity (GHSV) of the gas to be treated in the absorbing step is approximately 2,000 to 6,000/h, in order to reduce the pressure loss related to the energy required to boost the gas to be treated under atmospheric pressure using a blower or the like, it is necessary to limit the thickness of the packed bed to approximately 1,500 mm (superficial linear velocity to an average of approximately 0.5 m/s). To achieve this, the aspect ratio of the packed bed ([layer thickness]/[cross-sectional area of the flow channel]^1/2) must be considerably reduced. However, if the cross-sectional area of the flow channel (= layer cross-sectional area) is increased in order to reduce the aspect ratio of the packed bed, the installation area (footprint) may become too large in a conventional type of packed bed in which the gas to be treated flows vertically. This may not be a problem if space for installing a carbon dioxide separation and recovering device can be secured from the beginning on a vast site, but in cases where a carbon dioxide separation and recovering device is added to an existing power plant later, there is often not enough space for installation. In such cases, by designing the packed bed in a way that allows gas to pass horizontally (horizontal flow type), the cross-sectional area of the flow path can be expanded vertically without increasing the installation area. Typical horizontal flow packed bed designs include leaf type (parallel flow type) and tubular type (radial flow type). A leaf (flat plate) type refers to a configuration in which the packed bed is arranged in an upright, hollow, flat plate shape, and the fluid passes through the packed bed horizontally and parallel to the surrounding material. On the other hand, a radial flow type refers to a configuration in which the packed bed is arranged in an upright, annular shape, and the fluid passes through the packed bed horizontally and radially from the inside to the outside or from the outside to the inside of the annular pipe. In either configuration, multiple packed beds can be placed in one large airtight container, or one packed bed can be placed in one airtight container. When placing one packed bed in one airtight container, housing a radial flow type packed bed in the cylindrical airtight container is the most compact and space-saving option. Furthermore, in the radial flow type, as the packed bed is arranged in a tubular shape, it has the advantage of greater pressure resistance compared to the leaf (flat plate) type, where the packed bed is arranged in a flat plate shape. In the present invention, from the viewpoint of strength when processing a large amount of gas at high speed by vacuum, the packed bed of the absorbent material is preferably of the radial flow type. The thickness of the packed bed is preferably as thin as possible, and specifically, from the viewpoint of suppressing pressure loss, it is preferably 3,000 mm or less.

On the other hand, the releasing step according to the present invention is characterized by its ability to minimize steam consumption. To release carbon dioxide from the absorbent material that has absorbed carbon dioxide in the absorbing step, the container housing the packed bed is evacuated to reduce the total pressure to less than 1 atmosphere, while simultaneously introducing steam and passing it through the packed bed.

Using a horizontal flow type packed bed allows for carbon dioxide absorption while suppressing pressure loss. However, if maldistribution occurs within the airtight container, the pressure loss increases. Therefore, it is desirable to suppress the maldistribution as much as possible. In the releasing step, from the viewpoint of reducing energy costs, it is preferable to minimize steam consumption as much as possible. However, reducing the volumetric flow rate of the steam makes the maldistribution more likely to occur within the airtight container. Therefore, from the viewpoint of increasing the volumetric flow rate and suppressing the maldistribution, it is necessary to introduce the steam under reduced pressure.

In SA-VSA, the primary operation in the releasing step is pressure reduction by evacuation, and the introduction of steam is merely a supplementary operation. The technical significance of introducing steam lies in the fact that when carbon dioxide absorbed by the absorbent material is released due to reduced pressure, the latent heat of desorption is taken from the absorbent material, and this is compensated for by the sensible heat and latent heat of condensation of the steam. In other words, introducing steam in the releasing step is considered to have the effect of promoting release by maintaining a constant temperature and preventing excessive cooling of the absorbent material when carbon dioxide is released all at once from the absorbent material due to reduced pressure in VSA (vacuum swing adsorption), thereby maintaining continuous release. In particular, when using a horizontal flow type packed bed, it is difficult to indirectly heat the packed bed inside the airtight container due to the structure of the equipment, and direct heating using the sensible heat of the steam is important. From the above viewpoint, it is preferable that at least a portion of the introduced steam condenses in the packed bed and imparts its latent heat of condensation to the packed bed. In the releasing step, the atmosphere in which the packed bed is placed is reduced to less than 1 atmosphere, and if the temperature of the introduced steam is 100°C or higher, the steam will not condense in the packed bed until the temperature drops below the dew point (less than 100°C) under those reduced pressure conditions. Therefore, preferably the temperature of the introduced steam is less than 100°C. This "steam below 100°C" is referred to as "low-temperature steam." In the releasing step, the total pressure is preferably reduced to 10-45 kPaA (the final "A" signifies absolute pressure) by a steam total pressure control mechanism, and the temperature of the introduced steam is more preferably below 80°C.

When the mass of carbon dioxide contained in the steam after passing through the separation device is denoted as t_{CO2}, and the mass of water contained in the steam after passing through the separation device is denoted as t_{H2O}, from the viewpoint of improving the efficiency of operating energy, the releasing step preferably includes controlling the amount of steam supplied to the separation device by a steam amount control mechanism so that t_{H2O}/t_{CO2} is, for example, within the range of 0.5 or more and 1.8 or less.

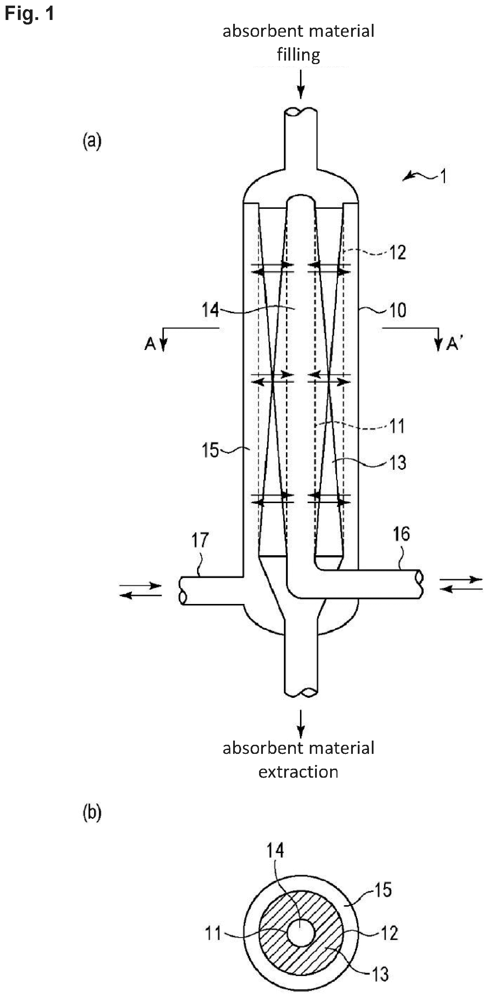

Fig. 1 shows a schematic cross-sectional view of an example of a radial flow type separation device preferably used in the method according to the present invention. Fig. 1(a) schematically shows a vertical cross-section of the device, and Fig. 1(b) schematically shows a horizontal cross-section of the device along the line A-A' in Fig. 1(a). In the separation device 1 of Fig. 1, an absorbent material filled between an inner cylindrical pipe 11 and an outer cylindrical basket 12, which are coaxially arranged inside a vertical cylindrical outer vessel 10, forms an annular packed bed 13 that extends vertically (referred to as a first direction). Inside the packed bed 13 (inside the inner cylindrical pipe 11) there is a cylindrical central space 14 which serves as a first flow path, and outside the packed bed 13 (outside the outer cylindrical basket 12) there is an annular peripheral space 15 which serves as a second flow path between it and the inner wall of the outer vessel 10. The central space (the first flow path) 14 and the peripheral space (the second flow path) 15 each have a first gas inlet/outlet 16 and a second gas inlet/outlet 17 at their lower ends, and the inner cylindrical pipe 11 and the outer cylindrical basket 12 are configured to allow gas to pass through them. The cylindrical central space (first flow path) 14 and the annular peripheral space (second flow path) 15 are configured to sandwich the packed bed 13 via the inner cylindrical pipe 11 and the outer cylindrical basket 12, thereby forming a gas flow path from the first gas inlet/outlet 16 to the second gas inlet/outlet 17 via the central space (first flow path) 14, the packed bed 13, and the peripheral space (second flow path) 15, or a gas flow path from the second gas inlet/outlet 17 to the first gas inlet/outlet 16 via the peripheral space (second flow path) 15, the packed bed 13, and the central space (first flow path) 14. The gas to be treated may flow in from the first gas inlet/outlet 16 and out from the second gas inlet/outlet 17, or it may flow in the opposite direction. Furthermore, as will be described in detail later, when releasing the carbon dioxide absorbed by the absorbent material (i.e., regenerating the absorbent material), a method of introducing steam in the same direction as the flow of the gas to be treated (co-current flow regeneration method) or a method of introducing steam in the opposite direction to the flow of the gas to be treated (counter-current flow regeneration method) can be adopted. Depending on the direction in which the gas to be treated flows in the absorbing step and the direction in which the steam flows in the releasing step, a conduit (not shown) for guiding the combustion exhaust gas that carries the carbon dioxide is connected in a switchable manner to the first gas inlet/outlet 16 and the second gas inlet/outlet 17. The second conduit is connected to a steam amount control mechanism (not shown) that controls the amount of steam supplied to the separation device.

When the gas to be treated is introduced from the first gas inlet/outlet 16, the gas introduced from the first conduit flows upward through the central space (first flow path) 14, during which it gradually penetrates into the packed bed 13 and passes through to the peripheral space (second flow path) 15 side while carbon dioxide is absorbed, then flows downward through the peripheral space (second flow path) 15, and the treated gas is released from the second gas inlet/outlet 17. In this case, as the gas to be treated gradually escapes from the first flow path (central space), the ascending velocity decreases, but the pressure remains almost constant from the bottom to the top (since there is no part that causes pressure loss in between). Similarly, as the treated gas gradually enters the second flow path (peripheral space), the descending velocity increases, but the pressure remains almost constant from the top to the bottom. Therefore, the pressure difference between the first flow path (central space) 14 and the second flow path (peripheral space) 15 is almost uniform from the bottom to the top of the packed bed 13, and the flow rate passing through the packed bed 13 is almost uniform from the bottom to the top. When the gas to be treated is introduced from the second gas inlet/outlet 17, the direction of gas flow is reversed, but the same can be said for the gas velocity and pressure as when the gas to be treated is introduced from the first gas inlet/outlet 16. However, if the difference between the cross-sectional area (flow path cross-sectional area) of the first flow path (central space) 14 and that of the second flow path (peripheral space) 15 in the direction perpendicular to the first direction becomes large, the flow velocity ascending in the first flow path (central space) 14 and the flow velocity descending in the second flow path (peripheral space) 15 will differ significantly, and even if the pressure difference on both sides of the packed bed 13 is uniform from the bottom to the top, it is considered that maldistribution is likely to occur. Therefore, it is preferable that the ratio of the cross-sectional area of the peripheral space (second flow path) 15 in a direction perpendicular to the first direction to the horizontal cross-sectional area of the central space (first flow path) 14 is approximately 1, specifically 0.8 or more and 1.25 or less.

In the device shown in Fig. 1, both the first gas inlet/outlet 16 and the second gas inlet/outlet 17 are located at the bottom of the first flow path 14 and the second flow path 15, respectively. However, both may be located at the top, or one at the top and the other at the bottom. When both are located at the top, the only difference is that the piping for the gas to be treated and the piping for the treated gas are located at the top instead of the bottom. Regarding the gas flow within the device, the same can be said as when both are located at the bottom. However, if one is located at the top and the other at the bottom, the direction of flow in the first channel and the direction of flow in the second channel become the same, and the way in which the flow velocity ascending or descending through the first flow path 14 changes in the vertical direction is opposite to the way in which the flow velocity ascending or descending through the second flow path 15 changes in the vertical direction (the inflow side gradually decelerates, and the outflow side gradually accelerates). Therefore, even if the horizontal cross-sectional area of the central space 14 and the horizontal cross-sectional area of the peripheral space 15 are made approximately equal, it is not possible to make the flow velocity on both sides of the packed bed 13 approximately equal from the bottom to the top. Thus, regardless of the ratio of the horizontal cross-sectional area of the central space 14 to the horizontal cross-sectional area of the peripheral space 15, it is considered that maldistribution is likely to occur. For the above reasons, it is preferable to provide the first gas inlet/outlet 16 and the second gas inlet/outlet 17 at the same end of the first and second channels.

In the absorbing step, the absorbent material that absorbed carbon dioxide is regenerated in the subsequent releasing step by releasing the absorbed carbon dioxide, and is then used again to absorb carbon dioxide in the next absorbing step. In the releasing step, the entire space inside the outer vessel 10, including the packed bed 13 and the first and second flow channels, is depressurized by a vacuum pump acting as a steam total pressure control mechanism. The vacuum pump is connected to either the first or second gas inlet/outlet to perform the vacuuming. Meanwhile, steam is introduced from the gas inlet/outlet that is not connected to the vacuum pump and flows through the same flow channel as the gas to be treated. As mentioned above, if the direction of flow of the gas to be treated in the absorbing step and the direction of flow of the steam in the releasing step are the same, it means co-current release (co-current regeneration), and if they are opposite, it means counter-current release (counter-current regeneration). Counter-current regeneration is superior to co-current regeneration in terms of release efficiency and the purity of the released carbon dioxide, so it is preferable to perform counterflow regeneration in the releasing step. Although the mass flow rate of the steam in the releasing step is much smaller than the mass flow rate of the gas to be treated in the absorbing step, in the releasing step the total pressure including the steam in the outer vessel 10 is preferably reduced to 10 to 45 kPaA (approximately 0.1 to 0.45 atmospheres). Therefore, the volumetric flow rate is not that small, and it is considered that the flow velocity changes in the first and second flow paths are similar to those in the absorbing step. However, in the releasing step, due to the lower total pressure, maldistribution is more likely to occur than in the absorbing step. Therefore, it is preferable that the first gas inlet/outlet 16 and the second gas inlet/outlet 17 be located at the same end of the first and second flow paths, even more so than in the absorbing step. In other words, in the present invention, it is preferable that the separation device 1 has a gas introduction part for introducing combustion exhaust gas or steam, and a gas exhausting part for releasing combustion exhaust gas or steam at the same end of the first flow path and the second flow path extending in the first direction.

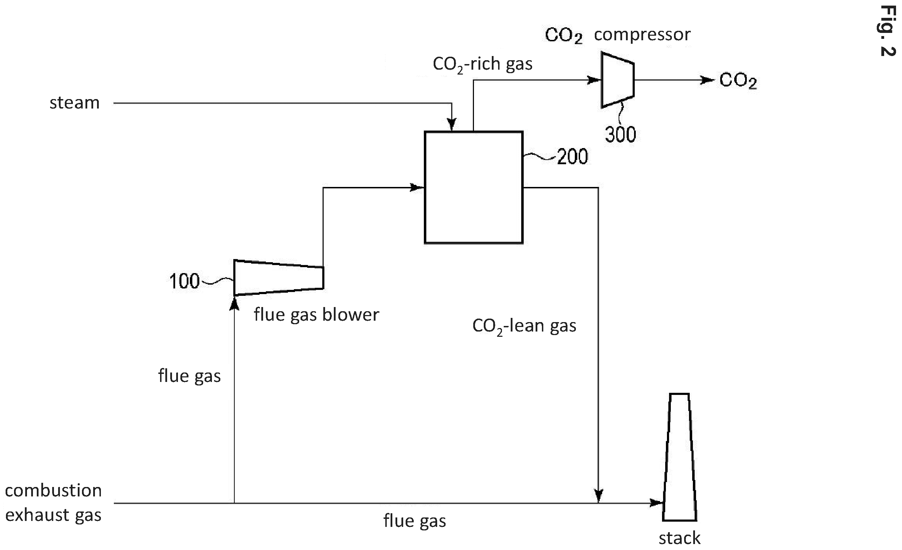

Fig. 2 shows a schematic diagram of an example of separating and recovering carbon dioxide from combustion exhaust gas of a power plant by applying the method according to the present invention. Combustion exhaust gas from the power plant is released into the atmosphere from a stack, but at least a portion thereof is extracted from a flue and guided by a flue gas blower (booster) 100 to a carbon dioxide separation/recovery plant (PCC plant) 200 that implements the method according to the present invention. After the carbon dioxide contained in the combustion exhaust gas is separated and recovered, the gas is configured to be returned to the flue. Steam for regeneration used in the carbon dioxide separation/recovery plant (PCC plant) 200 may be supplied from steam supply equipment of a thermal power plant that the power plant comprises in order to suppress construction costs and operating costs. The recovered carbon dioxide is compressed by a CO₂ compressor 300 and stored or used for useful purposes.

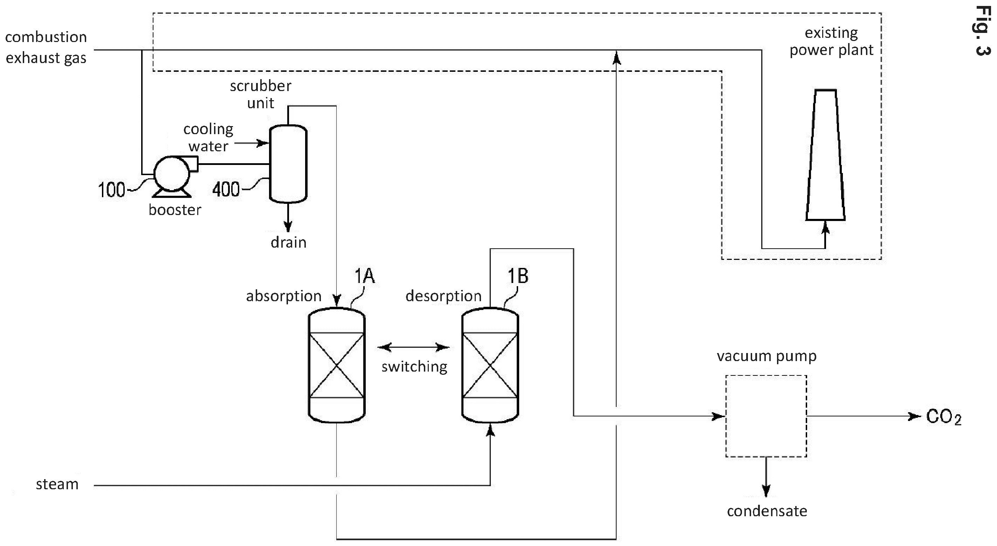

Fig. 3 shows a schematic diagram outlining a configuration example of the carbon dioxide separation/recovery plant (PCC plant) 200 that implements the method according to the present invention, including the separation device 1 (1A, 1B) that forms the core of the PCC plant 200 and its associated equipment. In Fig. 3, two separation devices 1A and 1B are used, and they are programmed so that when one is in the absorbing step, the other is in the releasing step, allowing for continuous carbon dioxide separation/recovery operations by alternating between the absorbing and releasing steps. However, it is also possible to use three or more towers of the separation devices, programming some of them so that some are in the releasing step and others are in the absorbing step, and rotating those devices to enable continuous carbon dioxide separation/recovery operations. The combustion exhaust gas drawn from the flue is boosted by a flue gas blower (booster) 100 and enters a scrubber unit 400, where it is dust-removed with washing water and then introduced into the separation device 1A in the absorbing step. The gas from which carbon dioxide has been recovered by passing through the packed bed of absorbent material is configured to be returned to the flue. Note that in Fig. 3, the flow of combustion exhaust gas in the separation tower 1A is omitted, and it does not specifically show that the combustion exhaust gas flows in from the top of the separation device and flows out from the bottom. On the other hand, it is shown that in the separation device 1B in the releasing step, low-temperature, low-pressure steam is introduced, and carbon dioxide is released as the pressure inside the separation device 1B is reduced. After the released carbon dioxide is extracted from the separation device along with the steam, the steam that accompanied the flow of carbon dioxide is separated as condensate, and the remaining carbon dioxide is recovered. At least a portion of the low-temperature, low-pressure steam introduced into the separation device 1B may be supplied from a thermal power plant.

### Reference Signs List

1: separation device
1A: first separation device
1B: second separation device
10: outer vessel
11: inner cylindrical pipe
12: outer cylindrical basket
13: packed bed
14: central space (first flow path)
15: peripheral space (second flow path)
16: first gas inlet/outlet
17: second gas inlet/outlet
100: flue gas blower (booster)
200: carbon dioxide separation/recovery plant
300: CO₂ compressor
400: scrubber unit

## Claims

1. A method for recovering carbon dioxide, comprising:
an absorbing step of passing combustion exhaust gas containing carbon dioxide through a radial flow type separation device equipped with an absorbent material to absorb the carbon dioxide into the absorbent material; and
a releasing step of passing steam through the separation device to release carbon dioxide from the absorbent material.

2. The method of claim 1, wherein a concentration of carbon dioxide in the combustion exhaust gas is 10% by volume or less.

3. The method of claim 1, wherein the separation device has a first flow path through which the combustion exhaust gas or the steam flows before passing through the absorbent material, and a second flow path through which the combustion exhaust gas or the steam flows after passing through the absorbent material,
the first flow path and the second flow path both extend in a first direction,
the separation device has a gas introduction part for introducing the combustion exhaust gas or the steam, and a gas exhausting part for exhausting the combustion exhaust gas or the steam at the same end of the first flow path and the second flow path extending in the first direction.

4. The method of claim 1, wherein the separation device has a first flow path through which the combustion exhaust gas or the steam flows before passing through the absorbent material, and a second flow path through which the combustion exhaust gas or the steam flows after passing through the absorbent material,
the first flow path and the second flow path both extend in a first direction,
a ratio of cross-sectional area of the second flow path in a direction perpendicular to the first direction to cross-sectional area of the first flow path in a direction perpendicular to the first direction is 0.8 or more and 1.25 or less.

5. The method of claim 1, wherein the mass of carbon dioxide contained in the steam after passing through the separation device is denoted as t_{CO2}, and the mass of water contained in the steam after passing through the separation device is denoted as t_{H2O},
the releasing step includes controlling the ratio of t_{H2O}/t_{CO2} to be within the range of 0.5 or more and 1.8 or less.

6. The method of claim 1, wherein the releasing step includes controlling the total pressure of the steam supplied to the separation device to be 10 kPaA or more and 45 kPaA or less.

7. A carbon dioxide recovering system comprising a radial flow type separation device equipped with an absorbent material, a first conduit for guiding combustion exhaust gas containing carbon dioxide to the separation device, and a second conduit for guiding steam to the separation device.

8. The system of claim 7, wherein a flow path through which the combustion exhaust gas introduced from the first conduit or the steam introduced from the second conduit flows within the separation device extends in a first direction,
the separation device has a gas introduction part for introducing the combustion exhaust gas or the steam, and a gas exhausting part for exhausting the combustion exhaust gas or the steam, both at the same end with respect to the first direction.

9. The system of claim 7, wherein the separation device has a first flow path through which the combustion exhaust gas or the steam flows before passing through the absorbent material, and a second flow path through which the combustion exhaust gas or the steam flows after passing through the absorbent material,
the first flow path and the second flow path both extend in the first direction,
a ratio of cross-sectional area of the second flow path in a direction perpendicular to the first direction to cross-sectional area of the first flow path in a direction perpendicular to the first direction is 0.8 or more and 1.25 or less.

10. The system of claim 7, further comprising a steam amount control mechanism for controlling an amount of steam supplied to the separation device.

11. The system of claim 7, further comprising a steam total pressure control mechanism for controlling total pressure of steam supplied to the separation device.
